# EUROPEAN PATENT SPECIFICATION

(11) **EP 0 975 105 B1**
(45) Date of publication and mention of the grant of the patent: **14.05.2003**
(21) Application number: 99113627.6
(22) Date of filing: 12.07.1999
(51) Int. Cl.: H04B 10/16, H04J 14/02

(54) **Method and device for regeneration and relay of optical transmission signal and wavelength division multiplexing transmission system using the same**
Verfahren und Vorrichtung zur Regeneration und Zwischenverstärkung eines optischen Übertragungssignals und Wellenlängenmultiplexübertragungssystem das diese verwendet
Procédé et dispositif de regéneration et de relais d'un signal transmis optique et système de transmission optique par multiplexage à longueur d'onde les utilisant

(30) Priority: 23.07.1998 JP 20761798
(43) Date of publication of application: 26.01.2000
(73) Proprietor: NEC CORPORATION, Tokyo (JP)
(72) Inventor: Sasaki, Takamasa, Minato-ku, Tokyo (JP)
(74) Representative: VOSSIUS & PARTNER

(56) References cited:
- EP-A- 0 421 449
- EP-A- 0 732 786
- EP-A- 0 841 768

## Description

The present invention relates to a method for regeneration and relay of an optical transmission signal in a wavelength division multiplexing transmission system using an optical fiber and a signal regeneration relay using the wavelength division multiplexing transmission system.

In a wavelength division multiplexing transmission system which multiplexes a plurality of waves as a signal channel so as to transmit the multiplexed waves, a long haul transmission system using, for example, EDFA as relays, which transmits the signal channels by non-regeneration relay transmission, has been used. However, in the optical amplifying relays that perform a multi-stage long haul transmission, a distance within which a transmission is satisfactorily conducted is limited due to factors such as fiber chromatic dispersions in fiber transmission paths and a S/N deterioration in an optical fiber amplifier. In order to perform further long haul transmissions, electrical regeneration relaying has been required.

Schematically, conventional systems for the electrical regeneration relaying are the ones that receive an optical signal using a wavelength division multiplexing receiving terminal unit and converts an electrical signal to an optical signal again to transmit the optical signal using a wavelength division multiplexing transmission unit.

In the conventional wavelength division multiplexing transmission relaying including the optical regeneration relaying that has been performed in the wavelength division multiplexing transmission system, the transmission signal is sent out by a transmission terminal unit composed of a wavelength division multiplexing transmission unit and a wavelength division multiplexer for multiplexing a plurality of outputted lights from the wavelength division multiplexing transmission unit. The optical signal attenuated on the transmission path is amplified by an optical amplifying relay system composed of an optical fiber amplifier as it is, and further transmitted.

In an optical regeneration relay system, the transmission signal that has been subjected to the wavelength division multiplexing is demultiplexed by a wavelength division demultiplexer. The receiving terminal unit comprises a plurality of receivers equal to the demultiplexed wavelengths in number. In the receiving terminal unit, each signal received is to be subjected to an optical-to-electrical conversion. These signals are converted to optical signals with different wavelengths by optical transmitters, each of which is provided for corresponding one of the signals. The optical signals with the different wavelengths are multiplexed by the wavelength division multiplexer again, and sent out to a subsequent transmission system having transmission paths.

In the case of the foregoing regeneration relay system, the wavelength division multiplexing transmission unit is provided for each regeneration relay. Then, an optical transmitter with a different wavelength for each channel must be used within the wavelength division multiplexing transmission unit. In the wavelength division multiplexing transmission unit for the regeneration relaying in each stage included in the transmission system, the wavelength of the optical signal outputted from the individual optical transmitter, which is built in the wavelength division multiplexing transmission unit, must be monitored strictly, so that the structure of the wavelength division multiplexing transmission unit is very complicated.

EP-A-0421449 discloses an optical repeater comprising a first converter for converting an optical input signal into an electrical signal, an equalizing amplifier which amplifies and outputs the electrical signal, a timing extraction circuit which extracts a timing signal from the amplified electrical signal and a phase inversion circuit. EP-A-0 841 768 describes a method of and device for controlling the phase of a clock signal in a point-to-point optical transmission.

The present invention was made from the viewpoint of the problems which have been posed by the foregoing technologies inherently. The object of a method of a regeneration and relay of an optical transmission signal of the present invention and an optical regeneration relay of the present invention is to enable a regeneration relaying by a simple construction and to facilitate a control of a wavelength of an optical signal on a transmission path by monitoring the wavelength of the optical signal outputted from a first stage wavelength division multiplexing transmission unit to the transmission path.

The optical regeneration relay of the present invention comprises the features as described in claim 1. An optical receiver is provided for converting an optical signal inputted thereto to an electrical signal, thereby outputting the electrical signal. An optical transmitter is provided for converting the electrical signal from the optical receiver to an optical signal and allowing a wavelength of the optical signal to be variable, thereby outputting the optical signal with the variable wavelength; and a wavelength monitoring circuit is provided for controlling the optical transmitter so that the wavelength of a light emitted from the optical transmitter and the wavelength of a light incident onto the optical receiver are equal to each other.

The above and other objects, features and advantages of the present invention will become more apparent from the following detailed description when taken in conjunction with the accompanying drawings wherein;
Fig. 1 is a block diagram showing a structure of a wavelength division multiplexing transmission system including a conventional regeneration optical relay system;
Fig. 2 is a block diagram showing a structure of a first embodiment of a regeneration optical relay of the present invention;
Fig. 3 is a block diagram showing a structure of a first embodiment of a wavelength monitoring circuit in the regeneration optical relay of the present invention;
Fig. 4(a), 4(b) and 4(c) are diagrams for explaining an operation of the first embodiment of the wavelength monitoring circuit in the regeneration optical relay of the present invention, Fig. 4(a) shows a switching control signal of an optical switch 411, Fig. 4(b) is a wavelength sweep signal in the case where a rotary etalon plate is used for, for example, a wavelength variable filter 412, and Fig. 4(c) is a diagram showing a photoelectric conversion output of a light receiving element 413;
Fig. 5 is a diagram showing a structure of a second embodiment of the wavelength monitoring circuit in the regeneration optical relay of the present invention;
Fig. 6 is a diagram showing a structure of a third embodiment of the wavelength monitoring circuit in the regeneration optical relay of the present invention;
Fig. 7 is a diagram showing a structure of a fourth embodiment of the wavelength monitoring circuit in the regeneration optical relay of the present invention;
Fig. 8 a diagram showing a structure of a first embodiment of the wavelength monitoring circuit in the regeneration optical relay of the present invention;
Fig. 9 is a diagram showing a structure of a second embodiment of the wavelength monitoring circuit in the regeneration optical relay of the present invention; and
Fig. 10 is a diagram showing a structure of a wavelength division multiplexing transmission system including the regeneration optical relay system of the present invention.

First, for the sake of a conventional optical relay will be described for facilitating the understanding of the present invention, prior to the description of a regeneration optical relay of the present invention.

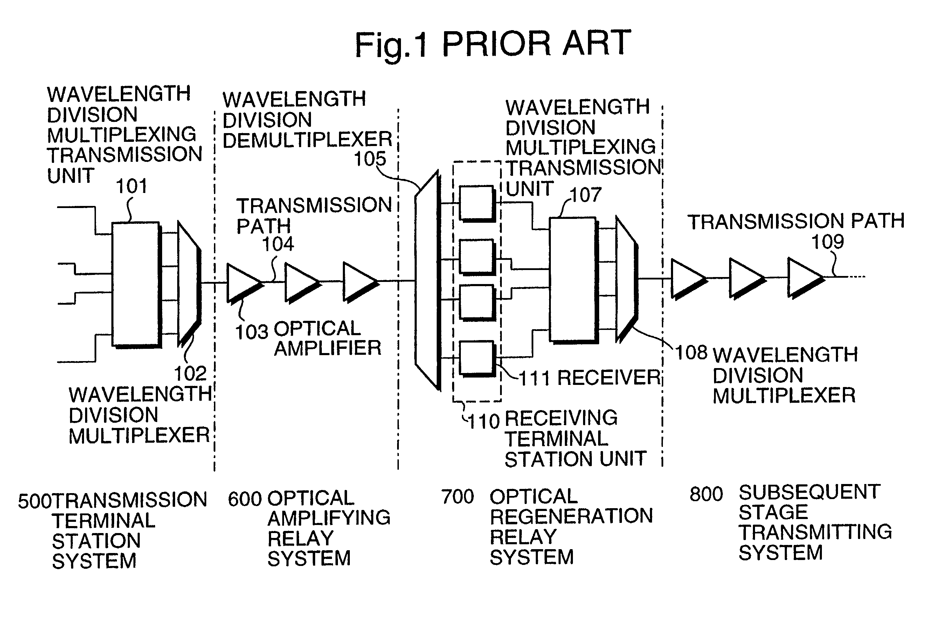

Fig. 1 is a diagram showing a structure of a wavelength division multiplexing transmission system including a conventional regeneration optical relay system.

Fig. 1 exemplifies a block diagram showing an example of a structure of the conventional wavelength division multiplexing transmission relay including an optical regeneration relay in a wavelength division multiplexing transmitting system. A transmission signal is transmitted from an optical transmission terminal station system 500 composed of a wavelength division multiplexing transmission unit 101 and a wavelength division multiplexer 102 for multiplexing a plurality of output lights from the wavelength division multiplexing transmission unit 101. The optical signal attenuated on the transmission path 104 is amplified, while remaining unchanged as a light, by an optical amplifying relay system 600 composed of optical amplifiers 103. The amplified optical signal is further transmitted.

In an optical regeneration relaying system 700, the transmitted signal that has been subjected to the wavelength division multiplexing is demultiplexed by a wavelength division demultiplexer 105. A receiving terminal station unit 110 comprises a plurality of receivers 111 equal to the wavelengths in number, which are to be demultiplxed. In the receiving terminal station unit 110, each of the demultiplexed signals is received by corresponding one of the receivers 111, and subjected to an optical-to-electrical conversion by corresponding one of the receivers 111. In a wavelength division multiplexing transmission unit 107, these signals are converted to optical signals with different wavelengths by corresponding optical transmitters, respectively. The optical signals with the different wavelengths are again multiplexed by an optical wavelength division multiplexer 108, and the multiplexed optical signal is transmitted to a subsequent stage transmitting system 800 having a transmission path 109, which is located in the subsequent stage.

In the case of the regeneration optical relay system as described above, the wavelength division multiplexing transmission unit is employed for each regeneration relay. Optical transmitter for transmitting optical signals with different wavelengths for each channel must be used in the wavelength division multiplexing transmission unit. The wavelengths of the optical signals outputted from optical transmitters built in the wavelength division multiplexing unit for the regeneration optical relay in each stage, which are included in the transmission systems, must be monitored, so that the structures of the optical transmitters are exceedingly complicated.

Next, the regeneration optical relay of the present invention will be described with reference to the drawings.

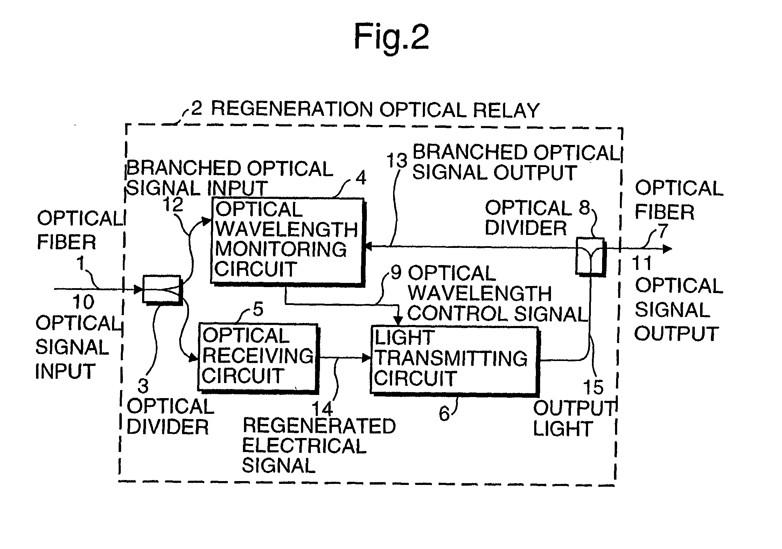

Fig. 2 is a diagram showing a structure of a first embodiment of the regeneration optical relay of the present invention.

The regeneration optical relay 2 shown in Fig. 2 is composed of an input side optical divider 3, a wavelength monitoring circuit 4, a light receiving circuit 5, a light transmitting circuit 6, and an output side optical divider 8. An optical signal input 10 with a specified wavelength from an optical fiber 1 is inputted to the regeneration optical relay 2. The optical signal outputted from the optical fiber 1 is branched into two optical signals by the optical divider 3. One of the optical signals obtained by branching the optical signal input 10 is inputted to the light receiving circuit 5 so as to be subjected to an optical-to-electrical conversion, and then transferred to the light transmitting circuit 6. The light transmitting circuit 6 performs an electrical-to-optical conversion based on the transmitting signal that has been subjected to the optical-to-electrical conversion, which is outputted from the light receiving circuit 5, so as to output an optical signal with a modulation wavelength identical to that of the optical signal input 10.

On the other hand, the other optical signal obtained by branching the optical signal input 10 by the optical divider 3 is inputted to the wavelength monitoring circuit 4. The wavelength monitoring circuit 4 compares the wavelength of the optical signal input 10 from the optical divider 3 with that of an optical signal output 11 which is obtained by branching an output signal from the light transmitting circuit 6 via the optical divider 8, the optical signal output 11 being a part of the output signal, thereby monitoring the wavelength of the output signal outputted from the light transmitting circuit 6. The result obtained after comparing and monitoring the wavelengths of the optical signal input 10 and the optical signal output 11 is transmitted to the light transmitting circuit 6 as a wavelength control signal 9. The light transmitting circuit 6 that received the wavelength control signal 9 transmits a light with a wavelength as an optical signal output 11, which exhibits an identical wavelength to that of the optical signal inputted to the light receiving circuit 5.

Thus, in the wavelength division multiplexing transmitting system for processing signals, each signal being close to others in a value of a wavelength, the individual regulations of the wavelengths of the output signals from all of the regeneration optical relays, which are coupled to each other in the relay transmitting system, are automatically conducted by sufficiently controlling the wavelengths of the signals from the transmitting side terminal station.

In Fig. 2, the light receiving circuit 5 comprises an optical-to-electrical conversion circuit including a light receiving element. The regenerated electrical signal 14 obtained by performing the optical-to-electrical conversion for the optical signal input 10 is transmitted to the light transmitting circuit 6. The light receiving circuit 5 comprises a 3R function according to demand.

The light transmitting circuit 6 has a function to output a light with a wavelength controlled based on the wavelength control signal 9 which is outputted from the wavelength monitoring circuit 4, as well as a function to modulate the output light 15 from the light transmitting circuit 6 based on the regenerated electrical signal 14 from the light receiving circuit 5. The light receiving circuit 5 is a light source having a function capable of performing a high speed electrical-to-electrical conversion and outputting a signal with a variable wavelength.

The wavelength monitoring circuit 4 detects the difference between the wavelength of the optical signal input 10 and the wavelength of the branched optical signal output 13. The optical signal input 10 is inputted to the wavelength monitoring circuit 4 from the transmission path via the optical divider 3, and the branched optical signal output 13 is obtained by branching the optical output 15 from the light transmitting circuit 6 by the optical divider 8 and inputted to the wavelength monitoring circuit 4. For the detection of the wavelength difference, optical principles such as spectroscopy, interference and diffraction are utilized. Information relating to the wavelength difference is outputted to the light transmitting circuit 6 as the wavelength control signal 9.

Next, an operation of the regeneration optical relay of Fig. 2 will be described.

First, when the demultiplexed optical signal input 10 is inputted to the regeneration optical relay 2 via the optical fiber 1, the optical signal inputted is branched in the optical divider 3, and then the branched signals are transmitted to the light receiving circuit 5 and the wavelength monitoring circuit 4, respectively. The optical signal inputted to the light receiving circuit 5 is subjected to the optical-to-electrical conversion therein, and outputted to the light transmitting circuit 6 as the regenerated electrical signal 14 that is an electrical signal.

The light transmitting circuit 6 modulates the optical output based on the electrical signal inputted thereto, and outputs the modulated signal as the optical signal. The optical signal outputted from the light transmitting circuit 6 is branched into the optical signal output 11 and the branched optical signal output 13 by the optical divider 8. The main signal is outputted from the transmission path via the optical fiber 7. On the other hand, the branched optical signal output 13 is fed-back to the wavelength monitoring circuit 4.

The wavelength monitoring circuit 4 detects the difference between the wavelength of the branched optical signal input 12 from the optical fiber 1 and the wavelength branched optical signal output 13 fed-back from the light transmitting circuit 6, and outputs the detection result to the light transmitting circuit 6 as the wavelength control signal 9. The wavelength monitoring circuit 4 controls the light transmitting circuit 6 by the wavelength control signal 9 so that the wavelength of the optical signal input 10 inputted to the regeneration optical relay 2 and the wavelength of the optical signal output 11 from the regeneration optical relay 2 will be equal to each other.

Next, a concrete circuit configuration of the wavelength monitoring circuit 4 will be described.

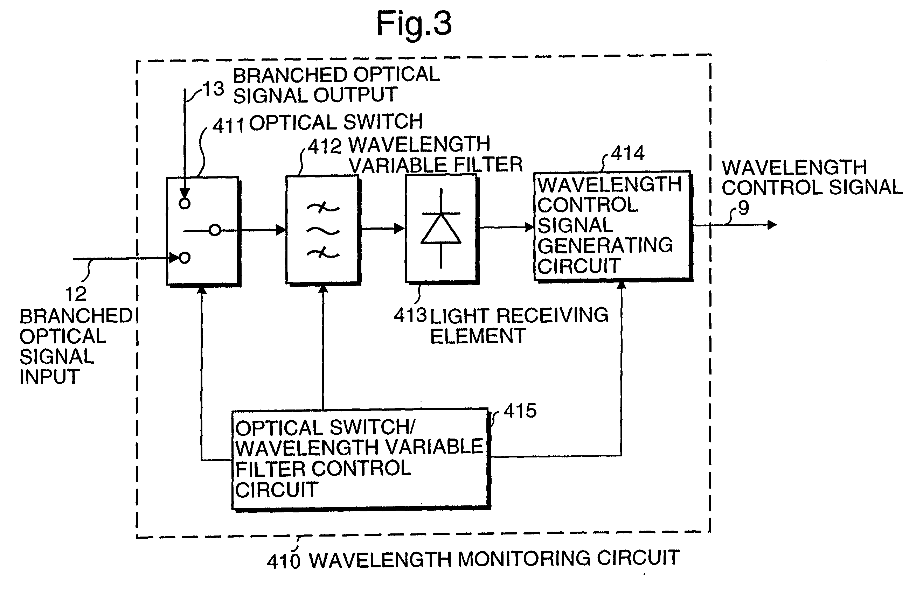

Fig. 3 is a diagram of a concrete configuration of a wavelength monitoring circuit 410 that is shown as the wavelength monitoring circuit 4 in Fig. 2. The wavelength monitoring circuit 410 comprises an optical switch 411, a wavelength variable filter 412, a light receiving element 413, a wavelength control signal generating circuit 414, and an optical switch/wavelength variable filter control circuit 415. The optical switch 411 is the one having two input terminals and one output terminal, which alternately switches two optical signals depending on time, which are the branched optical signal input 12 from the optical fiber 1 and the branched optical signal output 13 fed-back from the light transmitting circuit 6. The wavelength variable filter 412 sweeps the wavelength of the light from the optical switch 411. The optical output from the wavelength variable filter 412 is subjected to a photoelectric conversion by the light receiving element 413. For example, a rotary etalon plate, a sweep Fabri-Perot resonator and the like can be used as the sweep wavelength variable filter described above.

The wavelength control signal generating circuit 414 calculates the wavelength difference from the photoelectric conversion signal alternately switched depending on time, and transmits the wavelength control signal 9 to the light transmitting circuit 6 of Fig. 2. The optical switch/wavelength variable filter control circuit 415 controls the switching control signal of the optical switch 411, the wavelength sweep signal of the wavelength variable filter and the wavelength control signal generating circuit 414.

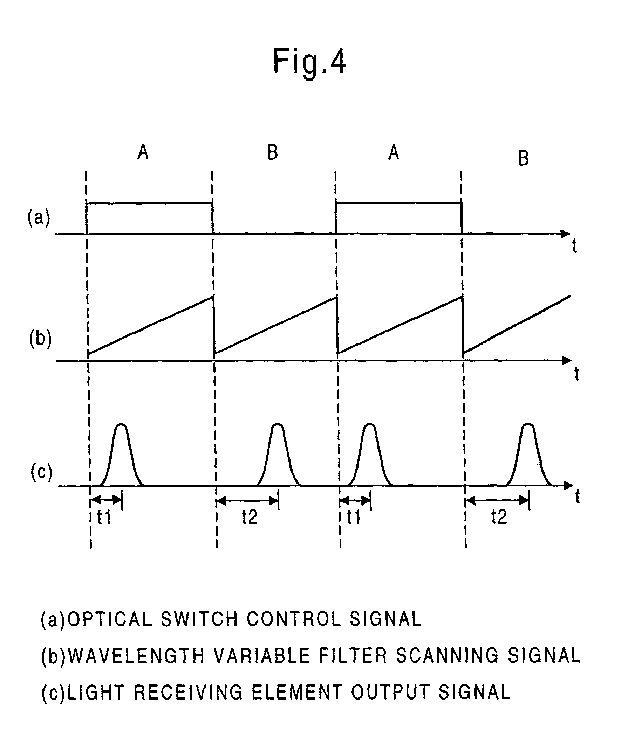

An operation of the wavelength monitoring circuit 410 shown in Fig. 3 will be described with reference to Figs. 4(a) to 4(c).

Figs. 4(a) to 4(c) are the diagrams showing the waveform changes of the control signal and output signal against time. Fig. 4(a) shows the switching control signal of the optical switch 411, Fig. 4(b) shows the wavelength sweep signal in the case where, for example, a rotary etalon plate is used as the wavelength variable filter 412, and Fig. 4(c) shows the photoelectric conversion output of the light receiving element 413.

As shown in Fig. 4(a), during the time region A the optical switch 411 is in a connection state where the optical switch 411 guides the branched optical input 12 to the wavelength variable filter 412. During the time region B the optical switch 411 is in a connection state where the optical switch 411 guides the branched optical output 13 to the wavelength variable filter 412. The optical switch 411 is controlled by the optical switch/wavelength variable filter control circuit 415 so that the optical switch 411 is alternately switched between these two connection states. In synchronization with the control signal for the optical switch 411, the wavelength variable filter 412 performs one sweep in each of the regions A and B as shown in Fig. 4(b).

The light after passing through the wavelength variable filter 412 constituted by a rotary etalon plate is converted to an electrical signal as described in Fig. 4(c) by the light receiving element 413. The rotary etalon plate rotates at a fixed speed.

An angle of the light incident onto the rotary etaron plate relative to the rotary etaron plate is changed by this rotation, with the result that a wavelength of the light transmitting through the rotary etaron plate changes. Accordingly, Fig. 4(c) shows the change of the wavelength of the transmitting light against the abscissa indicating time. If the wavelength of the light of the branched optical input 12 differs from the wavelength of the light of the branched optical output 13, which transmit through the rotary etaron plate, both of the lights transmitting through the rotary etaron plate show the peaks of the intensities in the different sweep timings, and the times t₁ and t₂ that are the periods from the start of the sweep to the appearance of the peaks differ from each other. The wavelength control signal generating circuit 414 calculates the difference between the times t₁ and t₂, and transmits the control signal as the wavelength control signal 9 to the light transmitting circuit 6.

The above descriptions were made for the case where the rotary etaron plate and the sweep type Fabriperot resonator which make the mechanical sweep are used as the wavelength variable filter 412. An acousto-optic tunable filter (AOTF) that is an electronic wavelength variable filter may be used as the wavelength variable filter 412, which has recently enhanced its characteristics. The AOTF has realized a wavelength selection characteristic of a waveguide mode inter-coupling of light travelling along an optical waveguide by utilizing a diffraction effect of a surface acoustic wave which propagates along the optical waveguide. In this case, a frequency of a high frequency sine wave signal supplied to a piezoelectric transducer, which drives the surface acoustic wave, is swept, so that it is possible to sweep the wavelength of the transmitting light similarly to the mechanical sweep. The wavelength monitoring circuit can also be structured using the acoustic optic tunable filter.

Although the description for the wavelength monitoring circuit in which the wavelength discriminating function that is a principal component is constituted by the wavelength variable filter was made, a spectroscope may also be used as a component that can utilize the wavelength discriminating function.

Next, a different embodiment of the wavelength monitoring circuit 4 will be described.

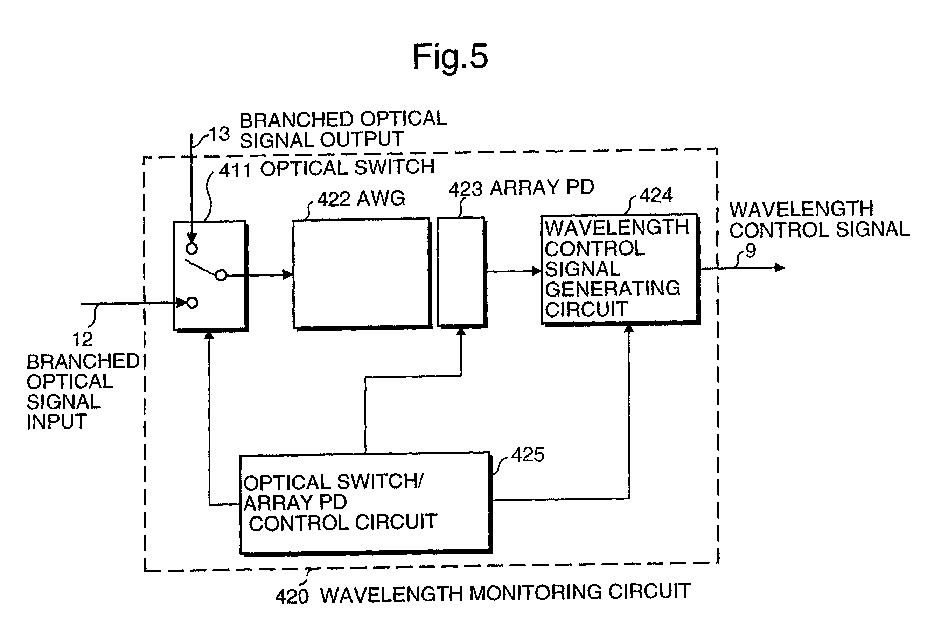

Fig. 5 is a diagram showing a structure of another embodiment of the wavelength monitoring circuit 4 which uses the combination of an arrayed-waveguide grating (hereinafter referred to as a AWG) and an array photodiode (hereinafter referred to as an array PD), which has been developed as a spectroscope, especially as a high integrated spectroscope with a small size.

In the AWG, lights simultaneously incident onto a plurality of waveguide arrays undergo the phase delay after passing therethrough. Each of the waveguide arrays has a gradually different length from others and the phase delay changes in proportion to the length of the waveguide. The AWG utilizes the fact that an inclination angle of a wavefront, which is produced after the passage of the light through the waveguide array, varies depending on the wavelength. Specifically, the AWG is an integrated type spectroscope having the structure that a principle of the spectroscope using the plane-shaped reflection diffraction grating is replaced with the waveguide array. By setting the difference in the lengths between the shortest waveguide and the longest waveguide to be large, the AWG can utilize a high-order diffraction that cannot be obtained the plane-shaped reflection diffraction grating, so that a spectroscope with a high resolution can be structured so as to have a size identical to that of a small sized integrated circuit.

The wavelength monitoring circuit 420 shown in Fig. 5 has a structure that the combination of the wavelength variable filter 412 and the light receiving element 413 in the wavelength monitoring circuit 410 of Fig. 3 is replaced by the combination of the AWG 422 and the array PD 423. The characteristics of the optical switch/array PD control circuit 425 for controlling the optical switch 411 and the array PD 423 are made to be different from those of the control circuit 415 of Fig. 3 depending on differences of elements used therein. For example, the wavelength monitoring circuit 410 of Fig. 3 has to output a sawtooth waveform that shows the sweep signal of Fig. 4(b).

On the contrary, in the case where a self-sweep type array photodetector typified by a CCD is used for the array PD 423 of the wavelength monitoring circuit 420 of Fig. 5, the self-sweep type array photodetector is permitted to perform an operation to output a plurality of clock signals for a charge transfer driving. A phase of each clock signals is shifted from others. In the case where a charge transfer type array PD is not used for the array PD 423 but an array PD for outputting photoelectric conversion signals in parallel is used, a signal for controlling the charge transfer type array PD is not needed to be outputted particularly, a connection line for connecting the control circuit and the array PD may be omitted. However, in this case, a plurality of connection lines corresponding to the number of the PD arrays, which connect the array PD 423 and the wavelength control signal generating circuit 424, are provided so as to output parallel signals directly from the array PD 423 to the wavelength control signal generating circuit 424.

Next, an operation of the embodiment in which the self-sweep array photodetector typified by the CCD is used for the array PD 423 of Fig. 5 will be described.

The optical switch 411 switches the connection between the branched optical signal input 12 and the branched optical signal output 13 alternately so as to connect the AWG 422 with either of the branched optical signals 12 and 13. The AWG 422 separates the optical signal inputted thereto into its spectral components. The AWG 422 gives a positional deviation spatially different from others to each of the separated lights depending on the wavelength of the lights, and allows the separated lights to be emitted therefrom. If the light of the branched optical signal input 12 and the light of the branched optical signal output 13 are different in the wavelength from each other, these lights are separated into their spectral components in the AWG 422 and emitted therefrom.

The charge transfer type array PD 423 receives each of the lights, each being obtained by separating the light into the spectral components by the AWG 422 and emitted therefrom while deviating spatially from others. The array PD 423 converts each of the lights into an electrical sweep signal, and outputs it to the wavelength control signal generating circuit 424. In this embodiment, the sweep cycle of the self-sweep type array PD 423 is made to be synchronous with the switching cycle of the optical switch 411. Specifically, the array PD 423 performs one sweep within a period of the half-cycle where the optical switch 411 is in connection with the branched optical signal input 12, and the array PD 423 performs subsequent one sweep within a subsequent period of the half-cycle where the optical switch 411 is in connection with the branched optical signal output 13. The wavelength control signal generating circuit 424 calculates the difference between the first time and the second time. The first time is a period from the sweep start to the peak appearance for the photoelectric conversion signal of the array PD 423 for the branched optical signal input 12 and the second time is a period from the sweep start to the peak appearance for the photoelectric conversion signal of the array PD 423 for the branched optical signal output 13. The first time corresponds to t₁ of Fig. 4(c) for explaining the operation of the embodiment using the mechanical sweep type wavelength variable filter of Fig. 3, and the second time corresponds to t₂ of Fig. 4(c). The wavelength control signal generating circuit 424 transmits the wavelength control signal 9 to the light transmitting circuit 6, based on the calculation result.

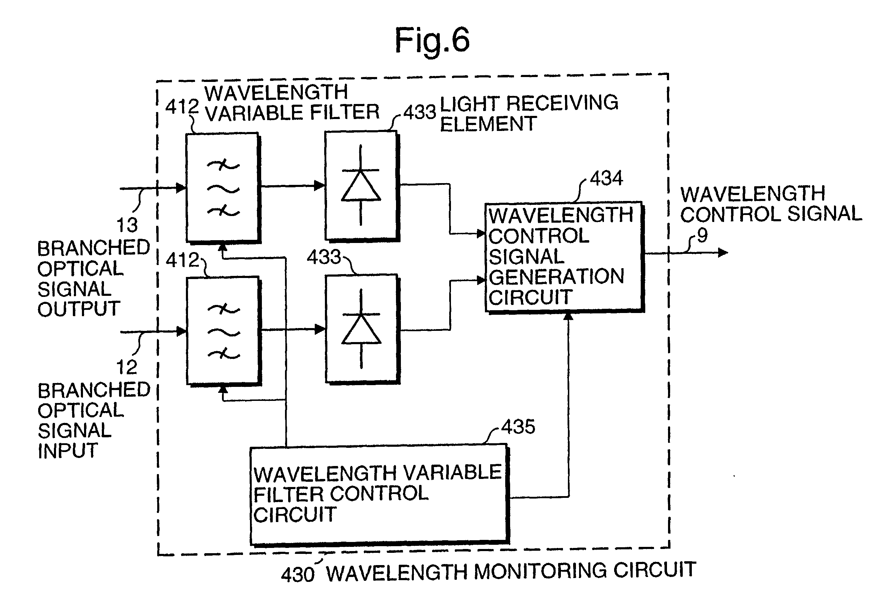

Fig. 6 is a diagram showing another embodiment of the wavelength monitoring circuit 4.

The wavelength monitoring circuit 430 of Fig. 6 uses two sets of combinations, each of which consists of the wavelength variable filter 412 and the light receiving element 413, instead of the wavelength monitoring circuit 410 and the optical switch 411 of Fig. 3. The wavelength monitoring circuit 410 is composed of the two sets of the foregoing combinations; the wavelength variable filter control circuit 435 for controlling the wavelength variable filters 412 so as to sweep the wavelengths in synchronization with each other; and the wavelength control signal generating circuit 434 for creating the wavelength control signal 9 from the parallel signals outputted from the two single type light receiving elements 433.

The branched optical signal input 12 is coupled to one of the wavelength variable filters 412 for exclusively sweeping the input 12 and separating the input 12 into its spectral components and one of the single type light receiving elements 433, and the branched optical signal output 13 is coupled to the other of the wavelength variable filters 412 for exclusively sweeping the output 13 and separating the output 13 into its spectral components and the other of the light receiving elements 433. The photoelectric conversion outputs from the two light receiving elements 433 are in parallel inputted to the wavelength control signal generating circuit 434. The wavelength control signal generating circuit 434 compares the parallel outputs from the two light receiving elements 433, and calculates the difference between the times when each of the peaks appears originating from the difference between the wavelengths. Then, the wavelength control signal generating circuit 434 generates the wavelength control signal 9, and transmits the wavelength control signal 9.

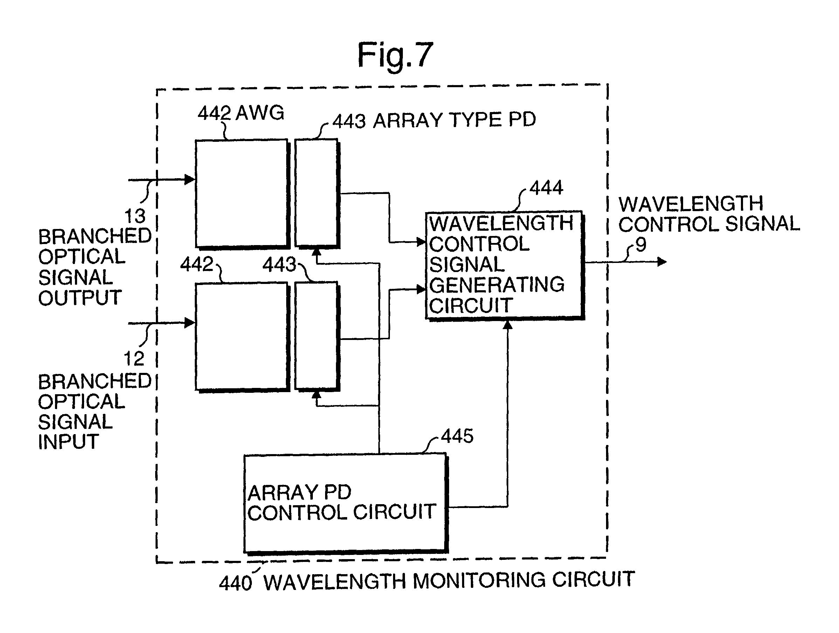

Next, still another embodiment of the wavelength monitoring circuit 440 is shown in Fig. 7.

The wavelength monitoring circuit 440 of Fig. 7 uses two sets of combinations, each of which is composed of the AWG 442 and the array PD 443, instead of the optical switch 411 of Fig. 4. The wavelength monitoring circuit 440 is composed of the foregoing two sets of components; the array PD control circuit 445 for controlling the two array PDs so as to synchronously sweep the wavelengths; and the wavelength control signal generating circuit 444 for creating the wavelength control signal 9 based on the outputs from the two array PDs.

The branched optical signal input 12 is coupled to one of the AWG 442 for exclusively separating the input 12 into its spectral components and one of the array type PDs 443 for exclusively allowing the optical output from the corresponding AWG to undergo the photoelectric conversion, and the branched optical signal output 13 is coupled to the other of the AWG 442 for exclusively separating the output 13 into its spectral components and one of the array type PDs 443 for exclusively allowing the optical output from the corresponding AWG to undergo the photoelectric conversion. The photoelectric conversion outputs from the two array PDs are in parallel inputted to the wavelength control signal generating circuit 444. The wavelength control signal generating circuit 444 compares the parallel outputs from the two array type PDs 443, and calculates the difference between the times when each of the peaks appears originating from the difference between the wavelengths. Then, the wavelength control signal generating circuit 444 generates the wavelength control signal 9, and transmits the wavelength control signal 9.

Next, a more concrete embodiment of the light transmitting circuit 6 of Fig. 2 will be described.

The light transmitting circuit 6 has a function to perform a modulation based on the regenerated electrical signal 14 from the light receiving circuit 5 and to output the light transmitting circuit output light 15; and a function to control the wavelength based on the wavelength control signal 9 outputted from the wavelength monitoring circuit 4. The light transmitting circuit 6 is a light source having a function capable of performing a high speed electrical-to-optical conversion and allowing the wavelength to be variable.

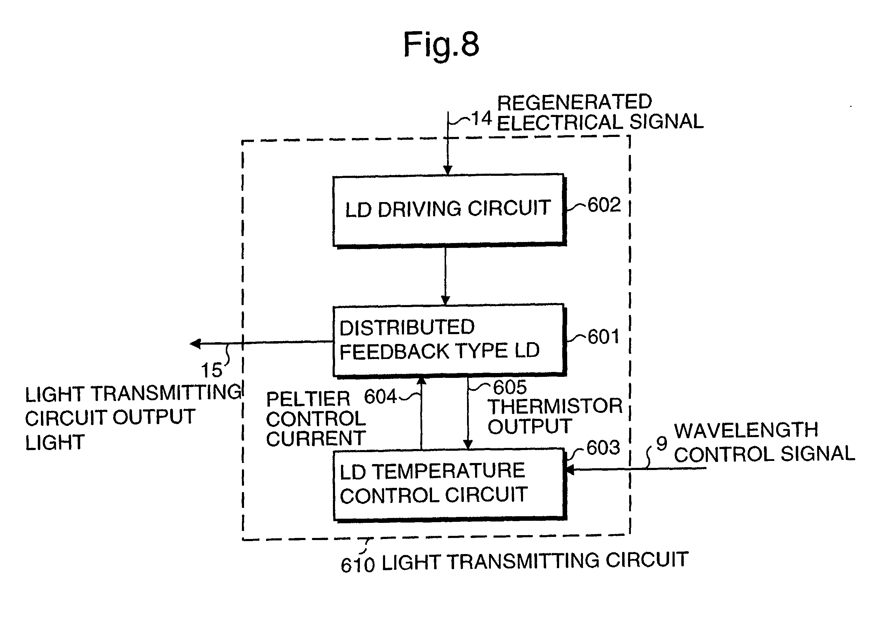

Fig. 8 is a diagram showing a structure of the light transmitting circuit 610 that is one concrete embodiment of the light transmitting circuit 6.

The light transmitting circuit 610 is composed of the distributed feedback type LD 601 that is a semiconductor laser device capable of allowing the wavelength to be variable; and the LD driving circuit 602; and the LD temperature control circuit 603 for controlling the temperature of the distributed feedback type LD 601 in order to control the wavelength. The LD driving circuit 602 amplifies the regenerated electrical signal 14 from the light receiving circuit 5 to a signal amplitude so as to be suitable for modulating the wavelength variable semiconductor laser 601, and superposes the regenerated electrical signal 14 on a bias current suitable for a signal modulation.

The distributed feedback type LD 601 is called a DFB-LD (Distributed Feedback Laser Diode) for short. As is well known, the DFB-LD, in which its longitudinal (axis) is defined by a reflection due to a Bragg grating cut in the optical guide layer, operates with a single longitudinal mode without depending a facing reflection, and suitable for a high speed communication. At the same time, the DFB-LD exhibits a great change of an oscillation wavelength originating from a change in an index of refraction due to a temperature change. In a crystalline material for forming a semiconductor laser with a wavelength of 1.55 µm, this change in the wavelength is about 3Å per a temperature change of 1°C. This is equivalent to a value ranging from about 30 to 40 GHz that is obtained by converted the wavelength change in terms of a frequency. When a high density wavelength multiplexing optical communication system with a frequency (wavelength) interval of, for example, about 100 GHz is assumed, this suggests that it is possible actually to control the wavelength by controlling the temperature of the semiconductor laser.

In Fig. 8, based on the wavelength control signal 9 from the wavelength control circuit 4, the LD temperature control circuit 603 controls the oscillation wavelength by the temperature of the distributed feedback type LD 601. Therefore, the thermistor output 605 from the thermistor themometer for detecting the temperature of the LD, which is provided in the vicinity of the distributed feedback type LD 601. Thus, the Peltier control current 604 for heating and cooling the distributed feedback type LD 601 is outputted.

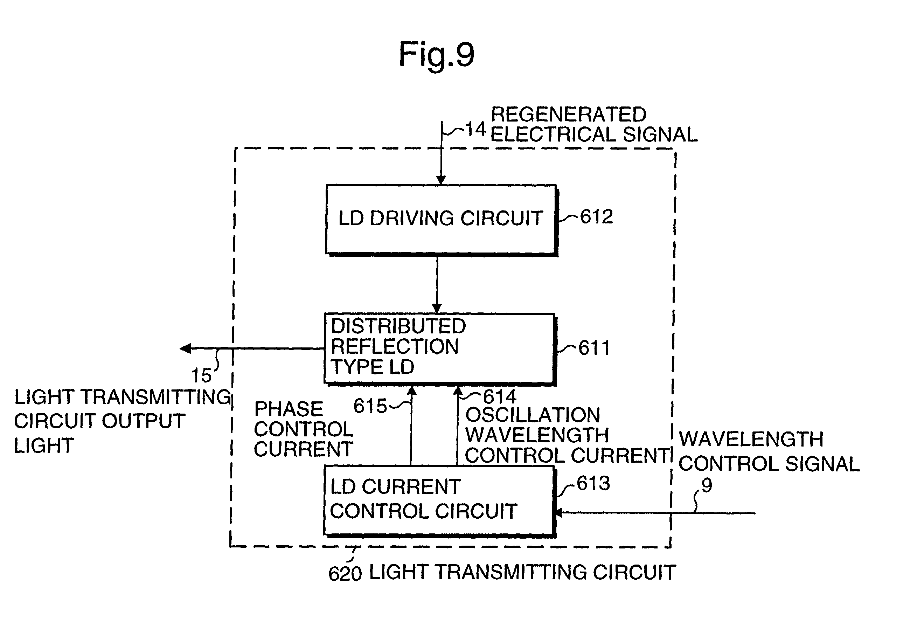

A structure of another embodiment of the light transmitting circuit 6 is shown in Fig. 9.

In Fig. 9, the light transmitting circuit 620 is composed of the distributed reflection type LD 611 that is a device different from the DF-LD of the semiconductor laser capable of allowing the wavelength to be variable; the LD driving circuit 612; and the LD current control circuit 613 for controlling the current of the distributed reflection type LD 611 to control the wavelength.

The LD driving circuit 612 amplifies the regenerated electrical signal 14 from the light receiving circuit 5 to a signal amplitude that is suitable for modulating the wavelength variable semiconductor laser 611, and superposes a bias current suitable for a signal modulation on the regenerated electrical signal 14.

The distributed reflection type LD 611 is called a DBR-LD (Distributed Bragg Reflector Laser Diode) for short. The DBR-LD has a structure that an activation region for emitting and amplifying a light, a DBR region for selecting one oscillation mode, and a phase adjusting region for controlling the longitudinal mode wavelength are formed in series in a light travelling direction so as to constitute a resonator against the light. Bias currents injected into the respective regions are individually set independently from each other, so that electrodes in the three regions are separated. A Bragg diffraction grating is formed in an optical waveguide layer in the DBR region and only a light with a specified wavelength (Bragg wavelength) is strongly reflected. As a result, one longitudinal mode in the vicinity of the Bragg wavelength is an oscillation mode. The Bragg wavelength can be controlled by changing the index of refraction of the waveguide layer by the current injection. The phase adjusting region is the one where the diffraction grating is not formed, and the index of refraction changes by injecting the current into this region. An optical length of the resonator changes due to the change of the index of refraction, so that a fine control for the oscillation wavelength can be performed. A current obtained by superposing the bias current on the regenerated electrical signal 14 is supplied to the electrode of the activation region, by the LD driving circuit 602.

Experimental confirmation shows an example in which when a current flowing through the Bragg region was allowed to change from 0 to 50 mA, the Bragg wavelength changed greatly by about 70 Å from 1.553 to 1.546 µm.

In Fig. 9, the LD current control circuit 613 outputs the oscillation wavelength control current 614 that is a current supplied to the DBR region of the distributed reflection type LD 611, which controls the oscillation wavelength of the distributed reflection type LD 611 based on the wavelength control signal 9 from the wavelength control circuit 4, and the phase control current 615 which is supplied to the phase adjusting region and finely controls the oscillation wavelength. The LD current control circuit 613 may be provided with a function to control the temperature of the distributed reflection type LD 611 as required, in addition to the foregoing function.

Next, the wavelength division multiplexing transmitting system used for the regeneration optical relay apparatus including the regeneration relay 2 of the present invention will be described.

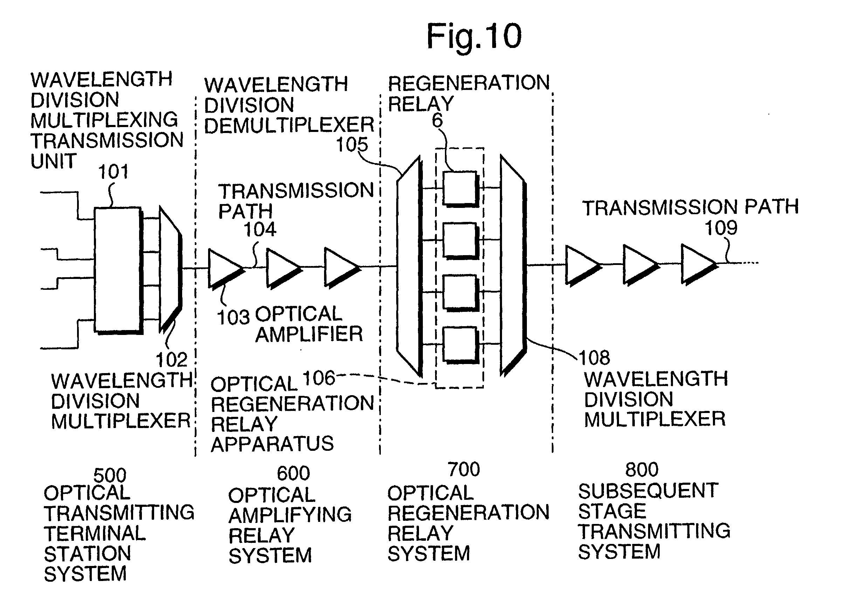

Fig. 10 is a diagram showing a structure of the wavelength division multiplexing transmitting system using including the regeneration optical relay 2 of the present invention, which is illustrated so as to compared the wavelength division multiplexing transmitting system with the wavelength multiplexing signal transmitting system including the optical regeneration relay. The wavelength division multiplexing transmitting system is composed of an optical transmitting terminal station system 500; an optical amplifying relay system 600; an optical regeneration relay system 700; and a subsequent stage transmitting system 800. The optical regeneration relay system 700 demultiplexes the transmitting signal by the demultiplexer 105, which has been subjected to the wavelength multiplexing. The optical regeneration relay system 700 multiplexes the optical outputs from the optical regeneration relay apparatus 106, which comprises the foregoing regeneration optical relays 6 provided corresponding to the number of the wavelengths, and each of the regeneration optical relays 6 by the multiplexer 108 again, and transmits the multiplexed output to the subsequent transmitting system 800 having the transmission path 109.

By using the optical regeneration relay apparatus having the regeneration optical relay of the present invention, the wavelength of the optical transmitter in the wavelength division multiplexing transmitting unit 101 of the optical transmitting terminal station system 500 at the first stage of the transmission path is controlled, whereby the wavelength of the whole of the transmission paths can be controlled.

As described above, the present invention has a feature in that the wavelength of the output signal in the regeneration relay is controlled so as to be equal to the wavelength of the input signal. Since the wavelength variable light source is used for the light source, it is unnecessary to prepare the regeneration optical relay for each of the different wavelengths. By controlling the wavelength of the optical transmitter at the first stage of the transmission path, it will be possible to control the wavelengths of the whole of the transmission path.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the scope of the following claims.

## Claims

1. A regeneration optical relay comprising:
a light receiving circuit (5) for converting an optical signal (10) inputted thereto to an electrical signal (14) to output the electrical signal;
a light transmitting circuit (6) for converting the electrical signal (14) outputted from said light receiving circuit to an optical signal, and allowing a wavelength of said optical signal to be variable and outputting said optical signal; and
a wavelength monitoring circuit (4) for controlling said light transmitting circuit so that a wavelength of said optical signal outputted from said light transmitting circuit is equal to that of said optical signal inputted to said light receiving circuit, said regeneration optical relay **characterised in that** said wavelength monitoring circuit (4) comprises :
a wavelength discriminator for discriminating the wavelengths of a first optical signal input to be referred and a second optical signal input that is the output of said light transmitting circuit to convert the output light to an electrical signal, thereby outputting the electrical signal;
a wavelength control signal generating circuit for calculating a difference between wavelengths of said first and second optical signal inputs based on the electrical signal from said wavelength discriminator, and transmitting a signal for controlling a wavelength to said light transmitting circuit; and
a control circuit for controlling said optical switch, wavelength discriminator and wavelength control signal generating circuit.

2. The regeneration optical relay according to claim 1, wherein said wavelength monitoring circuit further comprises:
an optical switch (411) having two input terminals and one output terminal, which alternately switches between said first optical signal input to be referred and said second optical signal input that is the output of said light transmitting circuit, and said wavelength discriminator is configured to discriminate the wavelength of an output light from said optical switch.

3. A regeneration optical relay comprising
a light receiving circuit (5) for converting an optical signal (10) inputted thereto to an electrical signal (14) to output the electrical signal;
a light transmitting circuit (6) for converting the electrical signal (14) outputted from said light receiving circuit to an optical signal, and allowing a wavelength of said optical signal to be variable and outputting said optical signal; and
a wavelength monitoring circuit (430) for controlling said light transmitting circuit so that a wavelength of said optical signal outputted from said light transmitting circuit is equal to that of said optical signal inputted to said light receiving circuit, said regeneration optical relay **characterised in that** said wavelength monitoring circuit comprises:
two sets of wavelength discriminators for discriminating between a wavelength of a first optical signal input to be referred and a wavelength of a second optical signal input that is the output of said light transmitting circuit (6), the wavelength of a second optical signal input being controlled, and converting the wavelength to an electrical signal, thereby outputting the electrical signal;
a wavelength control signal generating circuit (414) for calculating a difference between the wavelengths of said first and second optical signal inputs based on the electrical signal from said wavelength discriminator, and transmitting a signal for controlling a wavelength to said light transmitting circuit (6); and
a control circuit for controlling said two sets of wavelength discriminators and said wavelength control signal generating circuit (414).

4. The regeneration optical relay according to any of claims 1 to 3, wherein each of said wavelength discriminators comprises a wavelength variable filter and a single type light receiving element

5. The regeneration optical relay according to any of claims 1 to 3, wherein said each of said wavelength discriminators comprises a spectrometer and an array type light receiving element.

6. The regeneration optical relay according to claim 4, wherein said wavelength variable filter (412) is a sweep type Fabri-Perot resonator.

7. The regeneration optical relay according to claim 4, wherein said wavelength variable filter (412) is a rotary etalon plate.

8. The regeneration optical relay according to claim 4, wherein said wavelength variable filter (412) is an acoustic optical tunable filter.

9. The regeneration optical relay according to claim 5, wherein said spectrometer is an array waveguide diffraction grating.

10. The regeneration optical relay according to claim 5, wherein said array type light receiving element is a self-sweep type array light receiving element.

11. The regeneration optical relay according to claim 5, wherein said array type light receiving element is a parallel-output type array light receiving element.

12. The regeneration optical relay according to any one of claims 1 to 11, wherein said light transmitting circuit (6) comprises:
a wavelength variable semiconductor laser (601);
a semiconductor laser driving circuit (602) for amplifying a regeneration electrical signal from said light transmitting circuit to a signal amplitude suitable for modulating said wavelength variable semiconductor laser, and superposing a bias current on the regeneration electrical signal, the bias current being suitable for a signal modulation; and
a semiconductor laser temperature control circuit (603) for controlling an oscillation wavelength of said wavelength variable semiconductor laser by either a temperature or a current, based on a signal for controlling a wavelength from said wavelength control signal generating circuit.

13. The regeneration optical relay according to claim 12, wherein said wavelength variable semiconductor laser (601) is a distributed feedback type semiconductor laser.

14. The regeneration optical relay according to claim 12, wherein said wavelength variable semiconductor laser (601) is a distributed reflection type semiconductor laser.

15. A wavelength multiplexing optical transmitting system comprising:
a demultiplexer provided on a light transmission path connecting a wavelength multiplexing transmitting terminal station unit and a wavelength multiplexing receiving terminal station, said demultiplexer demultiplexing a wavelength multiplexing signal transmitted from said light transmitting path;
at least one regeneration optical relay unit for regenerating and relaying a plurality of optical signals outputted from said demuliplexer; and a multiplexer for multiplexing the plurality of optical signals with different wavelengths, which are outputted from said regeneration optical relay unit, and transmitting a multiplexed optical signal onto a light transmitting path,
wherein said regeneration optical relay unit comprises:
a light receiving circuit (5) for converting a optical signal with a specified wavelength to an electrical signal to output the electrical signal, the optical signal being inputted to said regeneration optical relay unit;
a light transmitting circuit (6) for converting the electrical signal outputted from said light receiving circuit to an optical signal, and variably outputting a wavelength of said optical signal; and
a wavelength monitoring circuit (4) for controlling said light transmitting circuit so that a wavelength outputted from said light transmitting circuit and a wavelength inputted to said light receiving circuit are made to be equal to each other, said optical transmitting system **characterized in that** said wavelength monitoring circuit (4) comprises :
a wavelength discriminator for discriminating the wavelengths of a first optical signal input to be referred and a second optical signal input that is the output of said light transmitting circuit to convert the output light to an electrical signal, thereby outputting the electrical signal;
a wavelength control signal generating circuit for calculating a difference between wavelengths of said first and second optical signal inputs based on the electrical signal from said wavelength discriminator, and transmitting a signal for controlling a wavelength to said light transmitting circuit; and
a control circuit for controlling said optical switch, wavelength discriminator and wavelength control signal generating circuit.

16. The wavelength multiplexing optical transmitting system according to claim 15, said wavelength multiplexing transmitting system further comprising:
an optical amplifier (103) arranged on said light transmitting path, said optical amplifier performing an optical amplifying for said optical signal.

## Patentansprüche

1. Optischer Regenerations-Zwischenverstärker, welcher aufweist:
eine Lichtempfangsschaltung (5) zum Umwandeln eines darin eingegebenen optischen Signals (10) in ein elektrisches Signal (14), um das elektrische Signal auszugeben,
eine Lichtübertragungsschaltung (6) zum Umwandeln des von der Lichtempfangsschaltung ausgegebenen elektrischen Signals (14) in ein optisches Signal und zum Ermöglichen, daß eine Wellenlänge des optischen Signals veränderlich ist, und zum Ausgeben des optischen Signals, und
eine Wellenlängenüberwachungsschaltung (4) zum Steuern der Lichtübertragungsschaltung, so daß eine Wellenlänge des von der Lichtübertragungsschaltung ausgegebenen optischen Signals derjenigen des in die Lichtempfangsschaltung eingegebenen optischen Signals gleicht,
wobei der optische Regenerations-Zwischenverstärker **dadurch gekennzeichnet ist, daß** die Wellenlängenüberwachungsschaltung (4) aufweist:
einen Wellenlängendiskriminator zum Unterscheiden der Wellenlängen einer ersten optischen Signaleingabe als Referenz und einer zweiten optischen Signaleingabe, die die Ausgabe der Lichtübertragungsschaltung ist, um das austretende Licht in ein elektrisches Signal umzuwandeln und das elektrische Signal auszugeben,
eine Wellenlängensteuersignal-Erzeugungsschaltung zum Berechnen einer Differenz zwischen Wellenlängen der ersten und der zweiten optischen Signaleingabe auf der Grundlage des elektrischen Signals vom Wellenlängendiskriminator und zum Übertragen eines Signals zum Steuern einer Wellenlänge zu der Lichtübertragungsschaltung und
eine Steuerschaltung zum Steuern des optischen Schalters, des Wellenlängendiskriminators und der Wellenlängensteuersignal-Erzeugungsschaltung.

2. Optischer Regenerations-Zwischenverstärker nach Anspruch 1, wobei die Wellenlängenüberwachungsschaltung weiter aufweist:
einen optischen Schalter (411) mit zwei Eingangsanschlüssen und einem Ausgangsanschluß, der alternierend zwischen der ersten optischen Signaleingabe als Referenz und der zweiten optischen Signaleingabe, die die Ausgabe der Lichtübertragungsschaltung ist, umschaltet, wobei der Wellenlängendiskriminator so konfiguriert ist, daß er die Wellenlänge eines aus dem optischen Schalter austretenden Lichts diskriminiert.

3. Optischer Regenerations-Zwischenverstärker, welcher aufweist:
eine Lichtempfangsschaltung (5) zum Umwandeln eines darin eingegebenen optischen Signals (10) in ein elektrisches Signal (14), um das elektrische Signal auszugeben,
eine Lichtübertragungsschaltung (6) zum Umwandeln des von der Lichtempfangsschaltung ausgegebenen elektrischen Signals (14) in ein optisches Signal und zum Ermöglichen, daß eine Wellenlänge des optischen Signals veränderlich ist, und zum Ausgeben des optischen Signals, und
eine Wellenlängenüberwachungsschaltung (430) zum Steuern der Lichtübertragungsschaltung, so daß eine Wellenlänge des von der Lichtübertragungsschaltung ausgegebenen optischen Signals derjenigen des in die Lichtempfangsschaltung eingegebenen optischen Signals gleicht,
wobei der optische Regenerations-Zwischenverstärker **dadurch gekennzeichnet ist, daß** die Wellenlängenüberwachungsschaltung aufweist:
zwei Sätze von Wellenlängendiskriminatoren zum Unterscheiden zwischen einer Wellenlänge einer ersten optischen Signaleingabe als Referenz und einer Wellenlänge einer zweiten optischen Signaleingabe, die die Ausgabe der Lichtübertragungsschaltung (6) ist, wobei die Wellenlänge einer zweiten optischen Signaleingabe gesteuert wird, und zum Umwandeln der Wellenlänge in ein elektrisches Signal, um das elektrische Signal auszugeben,
eine Wellenlängensteuersignal-Erzeugungsschaltung (414) zum Berechnen einer Differenz zwischen den Wellenlängen der ersten und der zweiten optischen Signaleingabe auf der Grundlage des elektrischen Signals vom Wellenlängendiskriminator und zum Übertragen eines Signals zum Steuern einer Wellenlänge zu der Lichtübertragungsschaltung (6) und
eine Steuerschaltung zum Steuern der zwei Sätze von Wellenlängendiskriminatoren und der Wellenlängensteuersignal-Erzeugungsschaltung (414).

4. Optischer Regenerations-Zwischenverstärker nach einem der Ansprüche 1 bis 3, wobei jeder der Wellenlängendiskriminatoren ein in der Wellenlänge veränderliches Filter und ein einzelnes Lichtempfangselement aufweist.

5. Optischer Regenerations-Zwischenverstärker nach einem der Ansprüche 1 bis 3, wobei jeder der Wellenlängendiskriminatoren ein Spektrometer und eine Lichtempfangselement-Mehrfachanordnung aufweist.

6. Optischer Regenerations-Zwischenverstärker nach Anspruch 4, wobei das in der Wellenlänge veränderliche Filter (412) ein wobbelnder Fabri-Perot-Resonator ist.

7. Optischer Regenerations-Zwischenverstärker nach Anspruch 4, wobei das in der Wellenlänge veränderliche Filter (412) eine drehbare Etalon-Platte ist.

8. Optischer Regenerations-Zwischenverstärker nach Anspruch 4, wobei das in der Wellenlänge veränderliche Filter (412) ein akustooptisch abstimmbares Filter ist.

9. Optischer Regenerations-Zwischenverstärker nach Anspruch 5, wobei das Spektrometer eine Wellenleiter-Beugungsgitter-Mehrfachanordnung ist.

10. Optischer Regenerations-Zwischenverstärker nach Anspruch 5, wobei die Lichtempfangselement-Mehrfachanordnung eine selbst-wobbelnde Lichtempfangselement-Mehrfachanordnung ist.

11. Optischer Regenerations-Zwischenverstärker nach Anspruch 5, wobei die Lichtempfangselement-Mehrfachanordnung eine Lichtempfangselement-Mehrfachanordnung mit einer Parallelausgabe ist.

12. Optischer Regenerations-Zwischenverstärker nach einem der Ansprüche 1 bis 11, wobei die Lichtübertragungsschaltung (6) aufweist:
einen in der Wellenlänge veränderlichen Halbleiterlaser (601),
eine Halbleiterlaser-Treiberschaltung (602) zum Verstärken eines elektrischen Regenerationssignals von der Lichtübertragungsschaltung zu einer Signalamplitude, die zum Modulieren des in der Wellenlänge veränderlichen Halbleiterlasers geeignet ist, und zum Überlagern des elektrischen Regenerationssignals mit einem Vorspannungsstrom, wobei der Vorspannungsstrom für eine Signalmodulation geeignet ist, und
eine Halbleiterlaser-Temperatursteuerschaltung (603) zum Steuern der Oszillationswellenlänge des in der Wellenlänge veränderlichen Halbleiterlasers entweder durch die Temperatur oder den Strom auf der Grundlage eines Signals zum Steuern einer Wellenlänge von der Wellenlängensteuersignal-Erzeugungsschaltung.

13. Optischer Regenerations-Zwischenverstärker nach Anspruch 12, wobei der in der Wellenlänge veränderliche Halbleiterlaser (601) ein Halbleiterlaser mit verteilter Rückkopplung ist.

14. Optischer Regenerations-Zwischenverstärker nach Anspruch 12, wobei der in der Wellenlänge veränderliche Halbleiterlaser (601) ein Halbleiterlaser mit verteilter Reflexion ist.

15. Optischen Wellenlängenmultiplex-Übertragungssystem, welches aufweist:
einen Demultiplexer, der auf einem Lichtübertragungsweg bereitgestellt ist, welcher eine Wellenlängenmultiplex-Übertragungsendgerät-Stationseinheit und eine Wellenlängenmultiplex-Empfangsendgerätestation miteinander verbindet, wobei der Demultiplexer ein vom Lichtübertragungsweg übertragenes Wellenlängenmultiplexsignal demultiplexiert,
mindestens eine optische Regenerations-Zwischenverstärkungseinheit zum Regenerieren und Zwischenverstärken mehrerer von dem Demultiplexer ausgegebener optischer Signale und
einen Multiplexer zum Multiplexieren der mehreren optischen Signale mit unterschiedlichen Wellenlängen, welche von der optischen Regenerations-Zwischenverstärkungseinheit ausgegeben werden, und zum Übertragen eines multiplexierten optischen Signals auf einen Lichtübertragungsweg,
wobei die optische Regenerations-Zwischenverstärkungseinheit aufweist:
eine Lichtempfangsschaltung (5) zum Umwandeln eines optischen Signals mit einer spezifizierten Wellenlänge in ein elektrisches Signal, um das elektrische Signal auszugeben, wobei das optische Signal in die optische Regenerations-Zwischenverstärkungseinheit eingegeben wird,
eine Lichtübertragungsschaltung (6) zum Umwandeln des von der Lichtempfangsschaltung ausgegebenen elektrischen Signals in ein optisches Signal und zum veränderlichen Ausgeben einer Wellenlänge des optischen Signals und
eine Wellenlängenüberwachungsschaltung (4) zum Steuern der Lichtübertragungsschaltung, so daß eine von der Lichtübertragungsschaltung ausgegebene Wellenlänge und eine in die Lichtempfangsschaltung eingegebene Wellenlänge auf den gleichen Wert gesetzt werden,
wobei das optische Übertragungssystem **dadurch gekennzeichnet ist, daß** die Wellenlängenüberwachungsschaltung (4) aufweist:
einen Wellenlängendiskriminator zum Unterscheiden der Wellenlängen einer ersten optischen Signaleingabe als Referenz und einer zweiten optischen Signaleingabe, die die Ausgabe der Lichtübertragungsschaltung ist, um das austretende Licht in ein elektrisches Signal umzuwandeln und das elektrische Signal auszugeben,
eine Wellenlängensteuersignal-Erzeugungsschaltung zum Berechnen einer Differenz zwischen Wellenlängen der ersten und der zweiten optischen Signaleingabe auf der Grundlage des elektrischen Signals vom Wellenlängendiskriminator und zum Übertragen eines Signals zum Steuern einer Wellenlänge zu der Lichtübertragungsschaltung und
eine Steuerschaltung zum Steuern des optischen Schalters, des Wellenlängendiskriminators und der Wellenlängensteuersignal-Erzeugungsschaltung.

16. Optisches Wellenlängenmultiplex-Übertragungssystem nach Anspruch 15, wobei das Wellenlängenmultiplex-Übertragungssystem weiter aufweist:
einen optischen Verstärker (103), der in dem Lichtübertragungsweg angeordnet ist, wobei der optische Verstärker das optische Signal verstärkt.

## Revendications

1. Relais optique de régénération comprenant :
un circuit de réception de lumière (5) pour convertir un signal optique (10) y étant entré en un signal électrique (14), de façon à transmettre le signal électrique ;
un circuit de transmission de lumière (6) pour convertir le signal électrique (14) issu dudit circuit de réception de lumière en un signal optique, et pour permettre à une longueur d'onde dudit signal optique d'être variable, et transmettre ledit signal optique ; et
un circuit de contrôle de longueur d'onde (4) pour commander ledit circuit de transmission de lumière de manière à ce qu'une longueur d'onde dudit signal optique transmis depuis ledit circuit de transmission de lumière soit égale à celle du signal optique entré dans ledit circuit de réception de lumière, ledit relais optique de régénération étant **caractérisé en ce que** ledit circuit de contrôle de longueur d'onde comprend :
un discriminateur de longueur d'onde pour différencier les longueurs d'onde d'une première entrée de signal optique à référer et d'une seconde entrée de signal optique, qui est la sortie dudit circuit de transmission de lumière, pour convertir la lumière transmise en un signal électrique, et par ce moyen transmettre le signal électrique ;
un circuit de génération de signal de commande de longueur d'onde pour calculer une différence entre les longueurs d'onde desdites première et seconde entrées de signal optique en se basant sur le signal électrique provenant dudit discriminateur de longueur d'onde, et pour transmettre un signal pour commander une longueur d'onde vers ledit circuit de transmission de lumière ; et
un circuit de commande pour commander ledit commutateur optique, ledit discriminateur de longueur d'onde et ledit circuit de génération de signal de commande de longueur d'onde.

2. Relais optique de régénération selon la revendication 1, dans lequel ledit circuit de contrôle de longueur d'onde comprend en outre :
un commutateur optique (411) ayant deux bornes d'entrée et une borne de sortie, lequel commute alternativement entre ladite première entrée de signal optique à référer et ladite seconde entrée de signal optique, qui est la sortie dudit circuit de transmission de lumière, et ledit discriminateur de longueur d'onde est configuré pour différencier la longueur d'onde d'une lumière de sortie issue dudit commutateur optique.

3. Relais optique de régénération comprenant :
un circuit de réception de lumière (5) pour convertir un signal optique (10) y étant entré en un signal électrique (24) de façon à transmettre le signal électrique;
un circuit de transmission de lumière (6) pour convertir le signal électrique (14) issu dudit circuit de réception de lumière en un signal optique, et pour permettre à une longueur d'onde dudit signal optique d'être variable et transmettre ledit signal optique ; et
un circuit de contrôle de longueur d'onde (430) pour commander ledit circuit de transmission de lumière de manière à ce qu'une longueur d'onde dudit signal optique transmis depuis ledit circuit de transmission de lumière soit égale à celle du signal optique entré dans ledit circuit de réception de lumière, ledit relais optique de régénération étant **caractérisé en ce que** ledit circuit de contrôle de longueur d'onde comprend :
deux ensembles de discriminateurs de longueur d'onde pour différencier une longueur d'onde d'une première entrée de signal optique à référer et une longueur d'onde d'une seconde entrée de signal optique, qui est la sortie dudit circuit de transmission de lumière (6), la longueur d'onde d'une seconde entrée de signal optique étant commandée, et pour convertir la longueur d'onde en un signal électrique et par ce moyen transmettre le signal électrique ;
un circuit de génération de signal de commande de longueur d'onde (414) pour calculer une différence entre les longueurs d'onde desdites première et seconde entrées de signal optique en se basant sur le signal électrique provenant dudit discriminateur de longueur d'onde, et pour transmettre un signal pour commander une longueur d'onde vers ledit circuit de transmission de lumière (6) ; et
un circuit de commande pour commander lesdits deux ensembles de discriminateurs de longueur d'onde et ledit circuit de génération de signal de commande de longueur d'onde (414).

4. Relais optique de régénération selon l'une quelconque des revendications 1 à 3, dans lequel chacun desdits discriminateurs de longueur d'onde comprend un filtre de longueur d'onde variable et un élément de réception de lumière simple.

5. Relais optique de régénération selon l'une quelconque des revendications 1 à 3, dans lequel chacun desdits discriminateurs de longueur d'onde comprend un spectromètre et un élément de réception de lumière à matrice.

6. Relais optique de régénération selon la revendication 4, dans lequel ledit filtre de longueur d'onde variable (412) est un résonateur Pérot-Fabry à balayage.

7. Relais optique de régénération selon la revendication 4, dans lequel ledit filtre de longueur d'onde variable (412) est une plaque étalon rotative.

8. Relais optique de régénération selon la revendication 4, dans lequel ledit filtre de longueur d'onde variable (412) est un filtre accordable optique acoustique.

9. Relais optique de régénération selon la revendication 5, dans lequel ledit spectromètre est un réseau de diffraction de guidage à matrice.

10. Relais optique de régénération selon la revendication 5, dans lequel ledit élément de réception de lumière à matrice est un élément de réception de lumière à matrice à balayage automatique.

11. Relais optique de régénération selon la revendication 5, dans lequel ledit élément de réception de lumière à matrice est un élément de réception de lumière à matrice à sortie parallèle.

12. Relais optique de régénération selon l'une quelconque des revendications 1 à 11, dans lequel ledit circuit de transmission de lumière (6) comprend :
un laser à semi-conducteur de longueur d'onde variable (601) ;
un circuit d'attaque de laser à semi-conducteur (602) pour amplifier un signal électrique de régénération, provenant dudit circuit de transmission de lumière, à une amplitude de signal adéquate pour moduler ledit laser à semi-conducteur de longueur d'onde variable, et pour superposer un courant de polarisation au signal électrique de régénération, le courant de polarisation étant adéquat pour une modulation du signal ; et
un circuit de commande de la température du laser à semi-conducteur (603) pour commander une longueur d'onde d'oscillation dudit laser à semi-conducteur de longueur d'onde variable soit par une température, soit par un courant, en se basant sur un signal pour commander une longueur d'onde du circuit de génération de signal de commande de longueur d'onde.

13. Relais optique de régénération selon la revendication 12, dans lequel ledit laser à semi-conducteur de longueur d'onde variable (601) est un laser à semi-conducteur à rétroaction distribuée.

14. Relais optique de régénération selon la revendication 12, dans lequel ledit laser à semi-conducteur de longueur d'onde variable (601) est un laser à semi-conducteur à réflexion distribuée.

15. Système de transmission optique par multiplexage en longueur d'onde comprenant :
un démultiplexeur disposé sur une voie de transmission de lumière connectant une station terminale de transmission par multiplexage en longueur d'onde et une station terminale de réception par multiplexage en longueur d'onde, ledit démultiplexeur démultiplexant un signal de multiplexage en longueur d'onde transmis de la voie de transmission de lumière ;
au moins une unité de relais optique de régénération pour régénérer et relayer une pluralité de signaux optiques issus dudit démultiplexeur ; et un multiplexeur pour multiplexer la pluralité de signaux optiques de différentes longueurs d'onde issus de ladite unité de relais optique de régénération, et pour transmettre un signal optique multiplexé sur une voie de transmission de lumière,
dans lequel ladite unité de relais optique de régénération comprend :
un circuit de réception de lumière (5) pour convertir un signal optique ayant une longueur d'onde spécifiée en un signal électrique pour transmettre le signal électrique, le signal optique étant transmis à ladite unité de relais optique de régénération ;
un circuit de transmission de lumière (6) pour convertir le signal électrique transmis depuis ledit circuit de réception de lumière en un signal optique, et transmettre de façon variable une longueur d'onde dudit signal optique ; et
un circuit de concrôle de longueur d'onde (4) pour commander ledit circuit de transmission de lumière de façon à ce qu'une longueur d'onde transmise depuis le circuit de transmission de lumière et une longueur d'onde entrée dans ledit circuit de réception de lumière soient rendues égales, ledit système de transmission optique étant **caractérisé en ce que** ledit circuit de contrôle de longueur d'onde (4) comprend :
un discriminateur de longueur d'onde pour différencier les longueurs d'onde d'une première entrée de signal optique à référer et d'une seconde entrée de signal optique, qui est la sortie dudit circuit de transmission de lumière, pour convertir la lumière transmise en un signal électrique, et par ce moyen transmettre le signal électrique ;
un circuit de génération de signal de commande de longueur d'onde pour calculer une différence entre les longueurs d'onde desdites première et seconde entrées de signal optique en se basant sur le signal électrique provenant dudit discriminateur de longueur d'onde, et pour transmettre un signal pour commander une longueur d'onde vers ledit circuit de transmission de lumière ; et
un circuit de commande pour commander ledit commutateur optique, ledit discriminateur de longueur d'onde et ledit circuit de génération de signal de commande de longueur d'onde.

16. Système de transmission optique par multiplexage en longueur d'onde selon la revendication 15, ledit système de transmission par multiplexage en longueur d'onde comprenant en outre :
un amplificateur optique (103) disposé sur ladite voie de transmission de lumière, ledit amplificateur optique effectuant une amplification optique dudit signal optique.
